## Europäisches Patentamt
## European Patent Office
## Office européen des brevets

(19)

(11) Veröffentlichungsnummer: **0 252 021**
**A1**

(12) **EUROPÄISCHE PATENTANMELDUNG**

(21) Anmeldenummer: **87830217.3**

(22) Anmeldetag: **11.06.87**

(51) Int. Cl.⁴: **C 04 B 18/24**
C 04 B 28/02
//(C04B28/02,14:16,16:08, 18:24)

(30) Priorität: **19.06.86 IT 4815086**

(43) Veröffentlichungstag der Anmeldung:
**07.01.88 Patentblatt 88/01**

(84) Benannte Vertragsstaaten:
**AT CH DE ES FR LI**

(71) Anmelder: **M3EMME TRE CORKS S.n.c. di MANCA Francesco & F.lli**
**106 Via Norbello**
**I-09071 Abbasanta (OR. IT) (IT)**

(72) Erfinder: **Manca, Francesco**
**Via Norbello 106**
**I-09071 Abbasanta (Or.) (IT)**

(74) Vertreter: **Sneider, Massimo et al**
**Lenzi & C. Via Lucania, 13**
**I-00187 Roma (IT)**

(54) Verfahren für die Herstellung von leichten wärme- und schallisolierenden Manufakturerzeugnissen und mit solchem Verfahren gefertigtes Manufakturerzeugnis.

(57) Beim Verfahren zur Herstellung von leichten wärme-und schallisolierenden Manufakturerzeugnissen wird der Kork in Granulatkörner zerkleinert und anschliessend mit der erforderlichen Bindemittelmenge vermischt in eine Form gegossen , sodass nach erfolgter Verfestigung und Alterung das Manufakturerzeugnis die gewünschten Festigkeitsmerkmale und mechanischen Eigenschaften zeigt , wobei der Kork vorzugsweise im ungekochten Zustand ein Granulatkornmass von 15 bis 30 mm , vorzugsweise von 20 bis 25 mm , und noch mehr vorzugsweise von 22 bis 24 mm erreicht .

Das für die Bildung von inneren Scheidewänden bestimmte Manufakturerzeugnis , oder Block , wird als Einsatz im Verhältnis von 60 bis 90 % in Granulatkörner zerkleinerten Kork aufweisen , wobei der Rest , d.h. von 40 bis 10 % , ein Bindemittel , z.B. ein Zementmörtel ist .

EP 0 252 021 A1

## Beschreibung

"Verfahren für die Herstellung von leichten wärme-und schallisolierenden Manufakturerzeugnissen und mit solchem Verfahren gefertigtes Manufakturerzeugnis"

Es ist bekannt, dass auf dem Gebiet des Bauwesens die Forschung nach Bauelementen immer lebhaft ist , welche letztere mit der Festigkeit auch Leichtigkeitseigenschaften , Wärmeisolierungs- u. Schallisolierungsmerkmale , Handlichkeitseigenschaften , usw. vereinen .

Bisher war man hierbei auf sowohl aus Ziegelstein als auch aus Zement gefertigte gelochte Blöcke angewiesen.

Bei den Gusstücken aus Zementbeton griff man zwecks Erleichterung auch auf den Einschluss in der Mischung von natürlichen Materialien von verhältnismässig geringem spezifischem Gewicht, z.B. Bimsstein, oder von künstlichen Materialien, z.B. Polystyrolschaum, zurück .

Diese vorgenannten Materialien weisen jedoch Nachteile auf , welche im ersten Fall auf die nicht übermässige Leichtigkeit des Materials , also des Bimssteins , und im zweiten Fall auf das geringe Haftvermögen zwischen Erleichterungsmaterial und Zementmörtel zurückzuführen sind.

Es besteht somit Raum um weitere Forschungen und Versuche mit anderen Materialien zu vollziehen .

Infolge solcher Forschungen wurde festgestellt , dass der zweckdienlich behandelte Kork angesichts seiner Leichtigkeitsqualität , der Kohäsionsqualität mit dem Zementmörtel und der Rauheit seiner Oberfläche ein ausgezeichnetes Füllmaterial in einem Zement-Manufakturerzeugnis oder dergleichen ist .

Sowohl vom thermischen als auch akustischen Gesichtspunkt sind weiters die isolierenden Qualitäten des Korkes wohl bekannt . Bereits früher wurden Korkplatten von angemessener Dicke verwendet , um bei den Abdeckungen von Gebäuden eine wärmeisolierende Schicht herzustellen . In diesem Fall wurde der Kork in verhältnismässig hohen Stärken , zum Beispiel 5 cm , verwendet und ist aus passend aneinandergefügten Platten gebildet .

Ein Gegenstand der vorliegenden Erfindung ist ein Behandlungsverfahren des Korkes , um ihn geeignet zu machen einsatz- oder zuschlagmässig in ein Zementkonglomerat oder wie auch immer in eine Bindemittelmasse für die Fertigung von Manufakturerzeugnissen eingebracht zu werden .

Ein weiterer Gegenstand der vorliegenden Erfindung ist ein mit dem obigen Verfahren erhaltenes Manufaktur erzeugnis .

Diese und andere Gegenstände und Vorteile werden sich deutlicher aus der nachfolgenden ausführlichen Beschreibung ergeben .

Erfindungsgemäss und bei einer bevorzugten Ausführungsform des Behandlungsverfahrens wird der Kork vorzugsweise im ungekochten Zustand , aber auch nachdem er eine Kochung erfahren hat , einer Vermahlung unterzogen, derart , um ein Granulatkornmass von 15 bis 30 mm , vorzugsweise von 20 bis 25 mm , und noch mehr vorzugsweise von 22 bis 24 mm zu erreichen .

Der so in Granulatkörner zerkleinerte Kork wird mit der erforderlichen Bindemittelmenge vermischt und in eine Form geschüttet , sodass nach stattgefundener Verfestigung und Alterung das Manufakturerzeugnis die gewünschten mechanischen Festigkeitsmerkmale und termischen und akustischen Isolierungseigenschaften aufweist .

Erfindungsgemäss wird bei einem für die Bildung von inneren Scheidewänden bestimmten Manufakturerzeugnis , oder Block, der in Granulatkörner der obigen Abmessungen zerkleinerte Kork als Einsatz im Verhältnis von 60 bis 90 % zugegen sein , wobei der Rest , d.h. von 40 bis 10% , zum Beispiel ein Zementmörtel mit etwaiger Gegenwart z.B. von 2 % Bimsstein und/oder Stroh und/oder anderer pflanzlicher , mineralischer , künstlicher Materialien ist .

Immer bei Verwendung von Zementmörtel für ein gelochtes Blöckchen mit einer Länge von 50 cm , einer Höhe von 25 cm und einer Dicke von 10 cm werden die bevorzugten Verhältnisse 83 Vol.-% Kork , 15 Vol.-% Mörtel und 2 Vol.-% sowohl mineralisches als auch pflanzliches oder künstliches Füllmaterial wie z.B. Bimsstein , Stroh , Schaumpolystyrol usw. sein.

In Anbetracht der spezifischen Gewichte des Korks und des Zementes wird ein wie vorgenannt hergestellter und verwendeter Kubikmeter von Gemisch gegenüber den ungefähr 150 kg eines Kubikmeters von Zement herkömmlicher Art ein Gewicht von ungefähr 48 - 52 kg haben . Die Einsparung an Gewicht ist somit augenscheinlich , wenn mit dem erfindungsgemässen Verfahren hergestellte Blöckchen gebraucht werden .

Man sprach von einem Manufakt , welches unter Verwendung eines äusserst preiswerten materials wie der Zement als Bindemittel hergestellt wurde . Es Könnte jedoch jedes beliebige weiter für den Zweck geeignete Bindemittelmaterial verwendet werden , wie z.B. Harze verschiedener Art , welche mit Kork verträglich sind , und bei dem der wie vorstehend dargelegt granulierte Kork als Füllstoff gebraucht wird .

Wie angedeutet ist die bevorzugte Form des Manufakturerzugnisses jene eines gegebenenfalls gelochten Blöckchens von bekannter Art bei Bauwerken , und dieses Manufakturerzeugnis eignet sich aufgrund der schall- und wärmeisolierenden Eigenschaften des granulierten Korks bestens für die Herstellung von Scheidewänden in Zivilwohngebäuden und in für anderen Gebrauch bestimmten Immobilien . Seine Leichtigkeit gestatten auch die Herstellung von diesen Scheidewänden in für solche Installationen nicht vorgesehenen Deckenzonen und ermöglicht im allgemeinen ebenfalls eine bemerkenswerte Einsparung bei den Tragkonstruktionen angesichts des geringeren Gewichtes konzentrierter Massen .

Seine Verwendung als äussere Ausfachung erfordert den Gebrauch von Verkleidungen und/oder Wandflächen , welche die sich an der Oberfläche des Manufaktes vorfindenden Korkgranulatkörner vor Einwirkung der atmosphärischen Einflüsse schützen können .

Das Verfahren für die Herstellung von leichten wärme- und schallisolierenden Manufakturerzeugnissen und das mit solchem Verfahren gefertigte Manufakturerzeugnis wurden nur beispielsweise beschrieben . Die Gegenstände der Erfindung können natörlich Abänderungen in der Form , in der Fertigung , in den Abmessungen und in allen Einzelheiten erfahren , welche das Wesen der Erfindung selbst nicht entstellen , wechseln oder verändern .

**Patentansprüche**

1.)Verfahren für die Herstellung von leichten wärme-und schallisolierenden Manufakturerzeugnissen , dadurch gekennzeichnet , dass der ungekochte oder gekochte Kork in Granulatkörner zerkleinert , mit der erforderlichen Bindemittelmenge vermischt und anschliessend in eine Form gegossen wird , sodass das Manufakturerzeugnis nach stattgefundener Verfestigung und Alterung die gewünschten mechanischen Beständigkeitseigenschaften aufweist .

2.)Verfahren für die Herstellung von leichten wärme-und schallisolierenden Manufakturerzeugnissen , nach Anspruch 1 , dadurch gekennzeichnet , dass der Kork vorzugsweise im ungekochten Zustand einer Vermahlung unterzogen wird bis er ein Granulatkornmass von 15 bis 30 mm, vorzugsweise von 20 bis 25 mm , und noch mehr vorzugsweise von 22 bis 24 mm erreicht .

3.)Verfahren für die Herstellung von leichten wärme-und schallisolierenden Manufakturerzeugnissen , nach Anspruch 1 und 2 , dadurch gekennzeichnet , dass bei einem für die Bildung von inneren Scheidewänden bestimmten Manufakturerzeugnis , oder Block , der in Granulatkörner der Abmessungen gemäss Anspruch 2 zerkleinerte Kork als Einsatz im Verhältsnis von 60 bis 90 % zugegen ist , wobei der Rest , d.h. von 40 bis 10 % , ein Bindemittel , z.B. Zementmörtel , mit etwaiger Gegenwart eines anderen mineralischen , pflanzlichen oder künstlichen Füllmaterials wie z.B. Bimsstein und/oder Stroh und/oder Schaumpolystyrol ist .

4.)Mit dem Verfahren gemäss Anspruch 1 bis 3 gefertigtes Manufakturerzeugnis , dadurch gekennzeichnet , dass für ein gelochtes Blöckchen mit einer Länge von 50 cm , einer Höhe von 25 cm und einer Dicke von 10 cm die bevorzugten Verhältnisse von Kork , Zementmörtel und Bimsstein 83 Vol.-% Kork , 15 Vol.-% Mörtel und 2 Vol.-% Bimsstein und/oder Stroh und/oder anderes Füllmaterial sind .

5.)Verfahren für die Herstellung von leichten wärme-und schallisolierenden Manufakturerzeugnissen und sich daraus ergebendes Manufakturerzeugnis , nach einem oder mehreren der vorstehenden Ansprüche , im wesentlichen

wie beschrieben .

)) **Europäisches**
**Patentamt**

# EUROPÄISCHER RECHERCHENBERICHT

Nummer der Anmeldung

EP 87 83 0217

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 908 414 (G.M. DE BOUCAUD) <br> * Seite 1, Zeilen 8-30,41-44 * | 1,5 | C 04 B 18/24 <br> C 04 B 28/02 // <br> (C 04 B 28/02 <br> C 04 B 14:16 <br> C 04 B 16:08 <br> C 04 B 18:24 ) |
| A | | 2,3 | |
| Y | BE-A- 471 328 (K.H. FEREMANS) <br> * Seite 1, Zeilen 1-13 * | 1,3,5 | |
| Y | GB-A- 577 491 (NEW ZEALAND LIGHTCRETE AND CONCRETE CO.) <br> * Ansprüche 1,2 * | 1,3,5 | |
| A | DE-C- 563 605 (F. HOFFMANN) <br> * Seite 1, Zeilen 39-52 * | 4 | |
| A | DE-A-2 312 261 (F.W. BRÖKER) <br> * Anspruch 1; Seite 1, Zeilen 1-9 * | 1 | RECHERCHIERTE SACHGEBIETE (Int. Cl.4) <br><br> C 04 B 18/00 <br> C 04 B 28/00 |
| A | FR-A- 576 391 (A. CORTESE) <br> * Seite 1, Zeilen 4-13 * | 1,2 | |
| A | US-A-4 166 749 (R.W. STERRETT et al.) <br> * Zusammenfassung * | 3 | |

Der vorliegende Recherchenbericht wurde für alle Patentansprüche erstellt.

| Recherchenort <br> DEN HAAG | Abschlußdatum der Recherche <br> 21-09-1987 | Prüfer <br> DAELEMAN P.C.A. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument